(19) Europäisches Patentamt
European Patent Office
Office européen des brevets

(11) EP 3 476 453 A1

(12) EUROPEAN PATENT APPLICATION

(43) Date of publication:
**01.05.2019 Bulletin 2019/18**

(21) Application number: **17198872.8**

(22) Date of filing: **27.10.2017**

(51) Int Cl.:
***B01D 21/01*** *(2006.01)*
***B01J 20/26*** *(2006.01)*
***C02F 1/56*** *(2006.01)*
***C08F 220/06*** *(2006.01)*
***C08F 220/56*** *(2006.01)*
*C02F 103/08* *(2006.01)*
*C02F 103/10* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Clariant International Ltd**
**4132 Muttenz (CH)**

(72) Inventors:
- **HAEUSSLER, Matthias**
**65239 Hochheim am Main (DE)**
- **SEFER, Adnan**
**84478 Waldkraiburg (DE)**
- **RUF, Friedrich**
**84184 Tiefenbach (DE)**
- **ERNST, Peter**
**65510 Idstein (DE)**
- **HOELZL, Gabriele**
**85405 Nandlstadt (DE)**

(74) Representative: **Graser, Konstanze**
**Clariant Produkte (Deutschland) GmbH**
**IPM / Patent & License Management**
**Arabellastrasse 4a**
**81925 München (DE)**

# (54) ACRYLAMIDE FREE POLYMER FOR DEWATERING APPLICATIONS

(57) The present application is directed to an acrylamide-free polymer for dewatering of sludge water streams, a water-in-oil emulsion comprising the polymer, a process and the use of the polymer for dewatering of sludge water streams.

| Accessory Name: | Analysis model: | Obscuration: | Weighted Residual: | Particle refrective index: |
|---|---|---|---|---|
| Hydro 2000S (A) | General purpose | 15.73 % | 0.719 % | 1.530 |

| D(0.10) : 4.64 µm | D(0.50) : 16.01 µm | D(0.90) : 77.45 µm | D(1.00) : 591.88 µm |
|---|---|---|---|

| Size (µm) | Vol Under % |
|---|---|
| 0.010 | 0.00 |
| 0.020 | 0.00 |
| 0.040 | 0.00 |
| 0.060 | 0.00 |
| 0.080 | 0.00 |
| 0.100 | 0.00 |
| 0.200 | 0.00 |
| 0.300 | 0.00 |
| 0.400 | 0.00 |

| Size (µm) | Vol Under % |
|---|---|
| 0.500 | 0.13 |
| 0.600 | 0.41 |
| 0.700 | 0.73 |
| 0.800 | 1.04 |
| 0.900 | 1.31 |
| 1.000 | 1.56 |
| 2.000 | 3.20 |
| 3.000 | 5.09 |
| 4.000 | 7.84 |

| Size (µm) | Vol Under % |
|---|---|
| 5.000 | 11.33 |
| 7.000 | 19.42 |
| 10.000 | 31.53 |
| 15.000 | 47.46 |
| 20.000 | 58.27 |
| 25.000 | 65.70 |
| 30.000 | 71.06 |
| 40.000 | 78.26 |
| 50.000 | 82.93 |

| Size (µm) | Vol Under % |
|---|---|
| 60.000 | 86.20 |
| 70.000 | 88.60 |
| 80.000 | 90.42 |
| 90.000 | 91.83 |
| 100.000 | 92.94 |
| 125.000 | 94.84 |
| 150.000 | 96.01 |
| 175.000 | 96.78 |
| 200.000 | 97.32 |

| Size (µm) | Vol Under % |
|---|---|
| 250.000 | 98.07 |
| 300.000 | 98.59 |
| 400.000 | 99.32 |
| 500.000 | 99.78 |
| 600.000 | 100.00 |
| 750.000 | 100.00 |
| 900.000 | 100.00 |
| 1200.000 | 100.00 |
| 1500.000 | 100.00 |

FIG. 1

EP 3 476 453 A1

## Description

The present application is directed to an acrylamide-free polymer for dewatering of sludge water streams, a water-in-oil emulsion comprising the polymer, a process and the use of the polymer for dewatering of sludge water streams.

Global rate of sedimentation and total volume of sediments has increased dramatically within the recent years. Dealing with these sediments responsibly has become an important issue to minimize the impact on the environment. Sediments collect not only in staggering volumes in our rivers, waterways and harbors but are also generated as a consequence of industrial activity in numerous economic sectors. At present, hundreds of millions of tons of these sediments require effective dewatering in order to be disposed or re-used. Furthermore, competition for water for industrial, agricultural and human consumption increases, making water re-use an increasingly relevant topic.

A very efficient way to dewater sediments is by use of flocculation technology. This technology involves the use of chemical aids, including polymers, which aggregate smaller silt particles to form larger composites ("flocs") to facilitate separation from the water.

As all sediments are different, effective dewatering presents a technical and economic challenge, especially where very fine sediments are concerned. In addition, silt materials are often contaminated, e.g. by heavy metals. The prevention of leach of heavy metals from the dewatered sediment is therefore mandatory. Further, re-use of the remaining water strongly depends on the use of non-toxic and environmentally friendly chemicals.

Within the state of the art, polyacrylamide-containing polymer compositions are known to be effective flocculants and mostly used in industrial-scale applications. Within the WO 2002/083258 such polyacrylamide-containing polymers are described as suitable for the flocculation of sediments with a high solid content.

Such compositions often still contain a certain amount of acrylamide. Acrylamide is known as a potential occupational carcinogen by U.S. government agencies and classified as a Group 2A carcinogen by the IARC. The European Chemical Agency added acrylamide to the list of substances of very high concern in March 2010. In animal models, exposure to acrylamide caused tumors and was found to be genotoxic (EFSA, 4. Juni 2015). The WHO recommends a guideline value of 0.5 μg/l, with the additional proviso that
exposure should be reduced to as low a level as technically achievable.

According to the WHO, the most important source of drinking-water contamination by acrylamide is the use of polyacrylamide flocculants that contain residual acrylamide monomer. Every effort should be made to limit free acrylamide monomer in polyacrylamide used for water treatment, and water suppliers should also make every effort to ensure that residual acrylamide in drinking-water is kept as low as is technically feasible. In particular, if acrylamide is controlled by limiting the amount dosed, overdosing should always be avoided (Report of a Joint FAO/WHO Consultation, WHO Headquarters, Geneva, Switzerland 25-27 June 2002 Issued).

Thus, there is a high need for new, environmentally friendly and safe chemicals which further guarantee efficient flocculation of sediments.

The inventors of the present invention have met this need by developing an acrylamide-free polymer for dewatering of sludge water streams characterized by a sedimentation capacity $C_{sed}$ of more than 70 1/min.

The polymer according to the present invention has been found to be particularly advantageous as it guarantees a speedy flocculation of all common sediments / sludge water types. Further, the polymer according to the present invention enables the retention of rare earth minerals and/or metals, which can be recovered from the flocculated sediments for further applications. Therefore, economic benefits are not only due to a higher speed of flocculation compared to state of the art material but also due to the possible recovery of valuable sludge components. In addition, the polymer according to the present invention will retain toxic compounds such as toxic heavy metals (for examples mercury, cadmium, tin and/or zinc) or their organometallic species within the flocs.

Acrylamide (or acrylic amide) is a chemical compound with the chemical formula C3H5NO (IUPAC prop-2-enamide), which polymerizes readily to polyacrylamides. Acrylamide is derived through hydrolysis of acrylonitrile as a white odorless crystalline solid, soluble in water, ethanol, ether, and chloroform. Acrylamide decomposes in the presence of acids, bases, oxidizing agents, iron, and iron salts. It decomposes non-thermally to form ammonia. Thermal decomposition produces carbon monoxide, carbon dioxide and oxides of nitrogen.

Within the present application, the term "polymer" refers to a molecule whose structure is composed of multiple repeating units, from which originates a characteristic of high relative molecular mass and attendant properties. The units composing polymers derive from molecules of low relative molecular mass, so called "monomers". Polymers may be of synthetic or natural origin. Within the present application, the term "polymer" refers to polymers of synthetic origin.

Within the present application, the term "acrylamide-free" is referring to any polymer, which has not been generated/polymerized by the use of the monomer acrylamide. Within a particularly preferred embodiment, the "acrylamide-free polymer" has been generated by radical polymerization.

The term "sedimentation capacity" is a parameter, which depicts the volume of water, which can be separated (dewatered from the sludge) within a certain amount of time also depending of the concentration of polymer used and

the turbidity of the supernatant after the flocculation. The sedimentation capacity is calculated as follows:

$$Csed = \frac{Vt}{V0 * ts} * \frac{1000}{\ln(\frac{Tsup}{T1}) * cpol}$$

Wherein $V_0$ represents the total volume of the sludge sample before addition of the flocculant (mL), $V_t$ represents the volume of the supernatant (dewatered water from the sludge sample at the time $t_s$) (ml), $t_s$ represents the sedimentation time (min), T1 represents the turbidity of the sludge sample diluted to 1 mg/kg solids (FNU), $\ln(T_{sup}/T1)$ represents the natural logarithm of the ratio of turbidity of the supernatant (FNU) and T1 measured after 30 min and $c_{pol}$ represents the concentration of the polymer compared to the solids present in the sludge sample (kg/1000kg solids).

Within the present invention, the sedimentation capacity is preferably higher than 70 1/min, further preferred higher than 110 1/min in particular preferred higher than 200 1/min and most preferred higher than 300 1/min. Within another preferred embodiment, the sedimentation capacity is selected within the range of from 70 to 2000 1/min, further preferred of from 100 to 1000 1/min and most preferred of from 200 to 700 1/min.

Within the present invention the ratio of volume $V_t$ and sedimentation time $t_s$ is preferably selected from the range of from 6 to 100 mL/min, preferred of from 10 to 70 mL/min, further preferred of from 14 to 60 mL/min, in particular preferred of from 20 to 55 mL/min and most preferred of from 25 to 55 mL/min.

Within the present invention, the term "sedimentation time" is to be understood as referring to the time of dewatering of the sediment or sludge through flocculation (formation of flocs) and subsequent deposition of the flocs, forming a supernatant on top of the deposited flocs. The sedimentation time is measured by a 30% volume change of the volume of the supernatant e.g. how long it takes to dewater 30 mL supernatant from a 100 mL sludge sample. The measurement method of the sedimentation time is also described within the examples.

Within the present invention the turbidity of the filtrate is preferably less than 730 FNU, preferably less than 650 FNU also preferred less than 600 FNU, in particular preferred less than 410 FNU and most preferred less than 300 FNU. It is further preferred to select the turbidity within the range of from from 1 to 730 FNU, preferably of from 5 to 650 FNU, further preferred of from 9 to 600 FNU, in particular preferred of from 10 to 410 FNU and most preferred of from 11 to 300 FNU. According to the present invention, the turbidity of the filtrate is measured photometrically by a HACH 2100Qis portable turbimeter calibrated with 4 standards (10, 20, 100 and 800 FNU) according to ISO 7027.

Within the present invention the concentration of the polymer $c_{pol}$ is preferably selected within the range of from 0.01 to 2.5 kg/1000kg solids, preferably of from 0.05 to 2.0 kg/1000kg solids, further preferred of from 0.1 to 1.0 kg/1000kg solids and most preferred of from 0.15 to 0.7 kg/1000kg solids.

Within the present invention the temperature of the filtrate is preferably selected from the range of from 1 to 50 °C, further preferred of from 4 to 40 °C, in particularly preferred of from 8 to 35 °C and most preferred of from 10 to 22 °C.

Within the present invention the term "sludge water" is to be understood as referring to any liquid composition comprising at least 60 wt.-% H2O and at least 5 wt.-% of solids of any kind. Within the present invention, the term "solids" preferably refers to silt particles of a granular material of a size between 0.002 mm and 0.063 mm (ISO 14688). Further, "solids" also refers to clay particles of a grain size of less than 0.002 mm. "Sludge water" may further comprise rare earth minerals and metals, salts but also toxic substances such as heavy metals (for examples mercury, cadmium, lead, chromium, nickel, copper, tin and/or zinc), organometallic compounds (such as tetrabutyltin) and toxic organic compounds (polycyclic aromatic substances and/or halogenated organic compounds). Sludge water may originate from marine waters or freshwaters but also from mining, dredging, civil engineering or oil production sites.

"Sludge water" according to the present invention may also comprise any kind of waste water known to a person skilled in the art. The term "waste water" as used within the present application particularly refers to any liquid comprising at least 60 wt.-% of H2O, which has been adversely affected in quality by anthropogenic influence. Waste water may also contain a certain amount of solids but is further characterized by its origin from a combination of domestic, industrial, commercial or agricultural activities, surface runoff or stormwater, and from sewer inflow or infiltration.

The "dewatering" according to the present invention is carried out by contacting the polymer according to the present invention with the sludge water, a subsequent flocculation and final filtration of the flocculated solids. Dewatering is preferably carried out by use of a dewatering unit such as geobags, sewn bags of various sizes constructed from woven or nonwoven geotextile material of various specifications, which is characterized by retaining the flocculated solids but releasing the liquid contained in the sludge water. However, within the scope of the present invention any kind of dewatering known to a person skilled in the art as suitable for the inventive purpose can be applied (further exemplary dewatering units are filter or belt presses).

Within another preferred embodiment of the present invention, the acrylamide-free polymer has an overall anionic charge. The term "overall anionic charge" as used within the present invention is to be understood as comprising any acrylamide-free polymer with more than 50 mol-% anionic charges, preferably more than 55 mol-% anionic charges,

more preferred more than 60 mol-% anionic charges and most preferred more than 65 mol-% anionic charges. Particularly preferred are acrylamide-free polymers with from 55 to 100 mol-% anionic charges, more preferred from 65 to 95 mol-% anionic charges and most preferred from 70 to 90 mol-% anionic charges.

Within another preferred embodiment of the present invention, the acrylamide-free polymer has an average molecular weight (Mw) of more than 500,000 Da, more preferred of more than 700,000 Da, further preferred of more than 800,000 Da and most preferred of more than 1,000,000 Da. Particularly preferred are acrylamide-free polymers with from 500,001 Da to 20,000,000 Da, preferably from 650,000 to 10,000,000 Da and most preferred from 750,000 to 5,000,000 Da. Within the present invention, the weight-average molecular weight (Mw) is to be measured by gel permeation chromatography against polyacrylate standards using PSS NOVEMA MAX Guard columns (size 1x30 A and 2x1000 A; 10 $\mu$m, 300 mm x 8 mm).

Within another preferred embodiment of the present invention, the acrylamide-free polymer comprises from 50.1 to 100 mol-% polyacrylic acid and/or polymethacrylic acid and/or salts of polyacrylic and/or polymethacrylic acid, preferably from 55 to 98.0 mol-%, further preferred of from 60 to 90 mol-%, particularly preferred of from 65 to 85 mol-% and most preferred of from 68 to 82 mol-% polyacrylic acid and/or polymethacrylic acid and/or salts of polyacrylic and/or polymethacrylic acid. Salts of polyacrylic acids and/or polymethacrylic acids are preferably selected from the group consisting of $Na^+$, $K^+$, $Mg^{2+}$, $Al^{3+}$, $NR'_4{}^+$ (R' = hydrogen, C1-C4-alkyl or C1-C4-hydroxylalkyl) and $Ca^{2+}$ containing salts.

Within another preferred embodiment of the present invention, the acrylamide-free polymer comprises from 0.001 to 49.9 mol-%, preferably of from 5.0 to 49 mol-%, further preferred of from 10.0 to 35 mol-% and most preferred of from 15.0 to 25.0 mol-% of a repeating unit consisting of the following structure according to formula I:

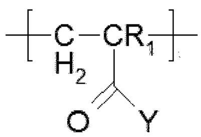

(I)

wherein R1 is hydrogen, methyl or ethyl, carboxymethyl
wherein Y is OR2 or NR2R3,
wherein R2 is hydrogen, a linear alkyl group having 1 to 50 carbon atoms, a branched alkyl group having 1 to 50 carbon atoms, a linear monohydroxyalkyl group having 2 to 6 carbon atoms, a branched monohydroxyalkyl group having 2 to 6 carbon atoms, a linear dihydroxyalkyl group having 2 to 6 carbon atoms, a branched dihydroxyalkyl group having 2 to 6 carbon atoms, a linear primary, secondary, tertiary or quarternary aminoalkyl group having 2 to 6 carbon atoms, a branched primary, secondary, tertiary or quarternary aminoalkyl group having 2 to 6 carbon atoms , an ethylenically unsaturated free radical polymerizable group capable of polymerization, a linear sulphonic acid alkyl group having 2 to 6 carbon atoms or its salts or a branched sulphonic acid alkyl group having 2 to 6 carbon atoms or its salts,
wherein R3 is a linear alkyl group having 1 to 50 carbon atoms, a branched alkyl group having 1 to 50 carbon atoms, a linear monohydroxyalkyl group having 2 to 6 carbon atoms, a branched monohydroxyalkyl group having 2 to 6 carbon atoms, a linear dihydroxyalkyl group having 2 to 6 carbon atoms, a branched dihydroxyalkyl group having 2 to 6 carbon atoms, a linear primary, secondary, tertiary or quarternary aminoalkyl group having 2 to 6 carbon atoms, a branched primary, secondary, tertiary or quarternary aminoalkyl group having 2 to 6 carbon atoms , an ethylenically unsaturated free radical polymerizable group capable of polymerization, a linear sulphonic acid alkyl group having 2 to 6 carbon atoms or its salts, a branched sulphonic acid alkyl group having 2 to 6 carbon atoms or its salts or morpholine.

Acrylamide-free polymers comprising from 15 to 30 mol-%, with a general structure according to formula I as defined above have been found to show particularly rapid formation of flocs with $t_s$ < 1 min.

Within another preferred embodiment of the present invention, the acrylamide-free polymer comprising a co-monomer wherein the co-monomer is selected from the group consisting of 2-methyl-2-(1-oxo-2-propenyl)amino-1-propanesulfonic acid and its salts, 4-acryloylmorpholine, N,N'-dimethyl-2-propenamide, N,N'-diethyl-2-propenamide, N-isopropyl-2-propenamide, hydroxyethyl-2-propenamide, N,N'-dimethylaminoethyl methacrylate, N,N'-dimethylaminoethyl acrylate , 2-hydroxylethyl acrylate, 2-hydroxylethyl methacrylate, maleic anhydride, itaconic acid, 2-carboxyethyl acrylate and N,N'-methylene-bis-2-propenamide and combinations thereof. Particularly preferred combinations of co-monomers are selected from the group consisting of 2-methyl-2-(1-oxo-2-propenyl)amino-1-propanesulfonic acid and its salts, N,N'-dimethyl-2-propenamide and 2-hydroxylethyl methacrylate. According to the present invention the term "co-monomer" is to be understood as a second monomer which is present in an amount of less than 50.0 mol-%.

According to the present invention the term "co-monomer" is to be understood as a second monomer which is present in an amount of less than 50.0 mol-%.

Acrylamide-free polymers comprising from 0.001 to 49.9 mol-%, preferably of from 1 to 40 mol-%, further

preferred of from 4 to 35 mol.-% and most preferred of from 5 to 30 mol.-% of a co-monomer to as defined above have been found to lead further significantly shortening the sedimentation time.

Within another preferred embodiment, the acrylamide-free polymer is selected from the group consisting of poly(acrylic acid-co-2-methyl-2-(1-oxo-2-propenyl)amino-1-propanesulfonic acid) and its salts, poly(acrylic acid-co-4-acryloylmorpholine) and its salts, poly(acrylic acid-co-N,N'-dimethyl-2-propenamide) and its salts, poly(acrylic acid-co-N,N'-diethyl-2-propenamide) and its salts, poly(acrylic acid-co-N-isopropyl-2-propenamide) and its salts, poly(acrylic acid-co-hydroxyethyl-2-propenamide) and its salts, poly(acrylic acid-coN,N'-dimethylaminoethyl methacrylate) and its salts, poly(acrylic acid-co-N,N'-dimethylaminoethyl acrylate) and poly(acrylic acid-co-2-hydroxylethyl acrylate) and its salts, poly(acrylic acid-co-2-hydroxylethyl methacrylate) and its salts, poly(acrylic acid-co-maleic anhydride) and its salts, poly(acrylic acid-co-itaconic acid) and its salts, poly(acrylic acid-co-2-carboxyethyl acrylate) and its salts and poly(acrylic acid-co-N,N'-methylene-bis-2-propenamide) and its salts.

Within another preferred embodiment the present invention relates to a water in oil emulsion comprising

(a) 10 to 65 wt.-% acrylamide-free polymer as defined before;

(b) 10 to 65 wt.-% water;

(c) 20 to 45 wt.-% oil;

(d) 2 to 6 wt.-% emulsifier.

The water in oil emulsion according to the present invention has the advantage that the polymer dissolves faster than dry polymer granules or powders or can even be directly dispensed into the dewatering-unit. Time consuming pre-dissolving of a dry preparation by a further device (as within the state of the art) is not necessary. The preparation of the water-in-oil emulsion of the present invention is described within the examples.

The term "oil" as used within the present invention is to be understood as comprising any oil known to a person skilled in the art as suitable for the inventive purpose. Within a preferred embodiment, the oil is selected from the group consisting of oils of plant or animal origin and synthetic oils, wherein synthetic oils (e.g. paraffinic and/or isoparaffinic oils, or organic solvents (e.g. cyclohexane) with low aromatic content (<1 % aromatics) and natural oils (e.g. rapeseed oils including canola, palm oils, beeswax, jojoba wax, sunflower oil, soya oil, and peanut oil and mixtures thereof are particularly preferred.

The term "emulsifier" as used within the present invention is to be understood as comprising any emulsifier known to a person skilled in the art as suitable for the inventive purpose. Within a preferred embodiment, the emulsifier is selected from the group consisting of nonionic emulsifiers with a preferred low hydrophilic/lipophilic balance (HLB value) preferably selected from the group consisting of sorbitan fatty acid esters and mixtures thereof.

Within preferred embodiments of the present invention, the HLB is selected within the range of from 1.5 to 7.5, preferably of from 2 to 6. Suitable low HLB emulsifiers include sorbitan fatty acid esters, specifically mono, sesqui, and/or tri-fatty acid esters, particularly $C_{14}$ to $C_{20}$ mono-unsaturated fatty acid, especially oleic acid, esters and in particular sorbitan monooleate; glycerol mono and/or di-fatty acid esters, particularly $C_{14}$ to $C_{20}$ mono-unsaturated fatty acid, especially oleic acid, esters; and fatty acid alkanolamides, particularly ethanolamides, especially diethanolamides, particularly those based on $C_{14}$ to $C_{20}$ mono-unsaturated fatty acids, especially oleic acid. The oleic acid in such compounds may be provided by mixed fatty acid feedstocks e.g. rape seed fatty acids, including $C_{14}$ to $C_{20}$ mono-unsaturated fatty acid, particularly oleic acid, as a main constituent.

Within a particularly preferred embodiment, the water in oil emulsion according to the present invention comprises

(a) 30 to 65 wt.-% acrylamide-free polymer as defined before;

(b) 30 to 65 wt.-% water;

(c) 25 to 35 wt.-% oil;

(d) 2 to 4 wt.-% emulsifier.

Within another preferred embodiment the inventive water in oil emulsion shows a viscosity of from 10 to 2000 mPas, preferably of from 20 to 1800 mPas, further preferred of from 50 to 1700 mPas and most preferred of from 80 to 1500 mPas. The viscosity is measured as described within the examples.

Within another preferred embodiment, the present invention relates to a process for dewatering of sludge water

streams comprising the following steps:

(i) Contacting the sludge water stream with from 0.01 to 2.5 kg of the acrylamide-free polymer as defined before per 1000 kg solids of the sludge water stream for a time period of from 1 second to 1 hour;

(ii) Separation of the sediment.

Within the present invention, the "contacting" can be carried out by any method and/or any means known to a person skilled in the art as suitable for the inventive purpose. Within a preferred embodiment, the contacting is carried out by injecting an aqueous dispersion of acrylamide-free polymer directly into the sludge water stream immediately prior to a point of high turbulence, using injection nozzles into the pipe carrying the material or by diverting the flow of sludge-water stream through a conditioning unit specifically designed to create the optimal dispersion of the acrylamide-free polymer within the sludge water. An example of such a conditioning unit is disclosed within DE 10 2016 101 417A1.

Within the present invention, the "separation" can be carried out by any method and/or any means known to a person skilled in the art as suitable for the inventive purpose. Within a preferred embodiment the separation is carried out by transferring the sediment into geobags which retain the flocked sediment particles but release the purified water. Within another preferred embodiment the separation is carried out by transferring the conditioned/treated sediment into membrane filter presses, where the flocked sediment particles are pressed between membranes attached to filter plates which press out clear water but retain the flocked sediment particles until the produced filter-cake is dry enough to be recovered. Within another preferred embodiment the separation is carried out by transferring the sediment into belt filter presses, where the flocked sediment particles are pressed between two moving porous fabrics in order to press out clear water but where the flocked sediment particles remain on the belts until the produced filter-cake is dry enough to be recovered. Within another preferred embodiment the separation is carried out by transferring the conditioned/treated sediment into gravity tables, where the flocked sediment particles are deposited onto a moving porous fabric to allow clear water to drain from the fabric but which retains the flocked sediment particles until the produced filter-cake is dry enough to be recovered. Within another preferred embodiment the separation is carried out by transferring the conditioned/treated sediment into a tailings pond or lagoon, where the flocked sediment particles rapidly precipitate and consolidate at the bottom of the lagoon, leaving a clear supernatant and the formation of a compact sediment base material.

Within a preferred embodiment of the inventive process, the the sludge water stream with is contacted with from 0.01 to 2.5 kg of the acrylamide-free polymer as defined before per 1000 kg solids, preferably of from 0.05 to 2.0 kg, further preferred of from 0.1 to 1.0 kg and most preferred of from 0.15 to 0.7 kg per 1000 kg solids.

Within another preferred embodiment of the inventive process, the contacting is carried out for a time period of from 5 seconds to 55 minutes, preferably of from 10 seconds to 45 minutes, further preferred of from 25 seconds to 40 minutes and most preferred of from 30 seconds to 30 minutes.

Within another preferred embodiment the inventive process further comprises the step:

(x) Contacting the sludge water stream with from 0.001 % to 2.0 wt.-% (weight mineral per dry weight sediment) of at least one mineral.

The term "dry weight" refers to the total weight of all sediment particles with zero moisture.

The contacting may be carried out by any method and/or means known to a person skilled in the art as suitable for the inventive purpose.

Within a preferred embodiment, the mineral may be added in an amount of from 0.005% to 1.8 wt.-% (weight mineral per dry weight sediment), preferably from 0.01 to 1.5 wt.-%, further preferred from 0.1 to 1.5 wt.-% and most preferred from 0.5 to 1 wt.-%.

The at least one mineral is preferably a clay mineral and within a more preferred embodiment the at least one mineral is selected from inorganic minerals and within a particularly preferred embodiment the at least one mineral is selected from the group consisting of $MgCO_3$, hydromagnesite, diatomaceous earth, bentonite, saponite, sepiolite, zeolite, hydrotalcite, quartz, kaolinite, talcum, alginite, smectite group minerals such as montmorillonite, saponite, hectorite and palygorskite, and mixtures thereof.

Within a preferred embodiment, the at least one mineral is coated with an cationic, anionic or neutral polymer ("coating polymer"), preferably cationic starch, anionic starch, guar gum, xanthan, fatty acids or the acrylamide-free polymer according to the invention.

Within a further preferred embodiment, the at least one mineral is coated with from 0.1 to 5 wt.-% (weight coating material/weight mineral), preferably from 0.2 to 4 wt.-%, particularly preferred from 0.3 to 3 wt.-% and most preferred from 0.5 to 2.5 wt.-% of the coating polymer.

Within the present invention step (x) may be carried out before, after or concurrently with step (i) of the inventive

process. Within a preferred embodiment, step (x) is carried out before step (i) of the inventive process.

Within a particularly preferred embodiment of the inventive process, the sludge water stream contains from 0.1 to 5 wt.-% of a salt, preferably NaCl.

Within a further aspect, the present invention relates to the use of the inventive, acrylamide-free polymer for dewatering of sludge water streams.

In the following particularly preferred embodiments of the inventive process are described which are not to be understood as limiting the invention in any respect. It is to be understood that irrespective of the following particularly preferred embodiments any combination of the features as defined before is within the scope of the present invention.

Particularly preferred embodiment 1

Acrylamide-free polymer for dewatering of sludge water streams with a sedimentation capacity $C_{sed}$ selected from the range of from 200 to 700, an average molecular weight of from 750,000 to 5,000,000 Da and comprising from 68 to 82 mol-% polyacrylic acid and/or polymethacrylic acid and/or salts of polyacrylic and/or polymethacrylic acid.

Particularly preferred embodiment 2

Acrylamide-free polymer for dewatering of sludge water streams as described within particularly preferred embodiment 1, further comprising of from 5 to 30 mol.-% of a co-monomer selected from the group consisting of 2-methyl-2-(1-oxo-2-propenyl)amino-1-propanesulfonic acid and its salts, 4-acryloylmorpholine, N,N'-dimethyl-2-propenamide, 2-hydroxylethyl acrylate, 2-hydroxylethyl methacrylate, maleic anhydride, itaconic acid and its salts, and combinations thereof.

Particularly preferred embodiment 3

Acrylamide-free polymer for dewatering of sludge water streams as described within particularly preferred embodiment 1 or 2, further comprising of from 15.0 to 25.0 mol-% of a repeating unit consisting of the following structure according to formula I:

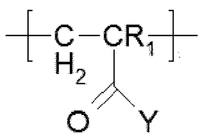

(I)

wherein R1 is hydrogen, methyl or ethyl, carboxymethyl
wherein Y is OR2 or NR2R3,
wherein R2 is hydrogen, a linear alkyl group having 1 to 50 carbon atoms, a branched alkyl group having 1 to 50 carbon atoms, a linear monohydroxyalkyl group having 2 to 6 carbon atoms, a branched monohydroxyalkyl group having 2 to 6 carbon atoms, a linear dihydroxyalkyl group having 2 to 6 carbon atoms, a branched dihydroxyalkyl group having 2 to 6 carbon atoms, a linear primary, secondary, tertiary or quarternary aminoalkyl group having 2 to 6 carbon atoms, a branched primary, secondary, tertiary or quarternary aminoalkyl group having 2 to 6 carbon atoms , an ethylenically unsaturated free radical polymerizable group capable of polymerization, a linear sulphonic acid alkyl group having 2 to 6 carbon atoms or its salts or a branched sulphonic acid alkyl group having 2 to 6 carbon atoms or its salts,
wherein R3 is a linear alkyl group having 1 to 50 carbon atoms, a branched alkyl group having 1 to 50 carbon atoms, a linear monohydroxyalkyl group having 2 to 6 carbon atoms, a branched monohydroxyalkyl group having 2 to 6 carbon atoms, a linear dihydroxyalkyl group having 2 to 6 carbon atoms, a branched dihydroxyalkyl group having 2 to 6 carbon atoms, a linear primary, secondary, tertiary or quarternary aminoalkyl group having 2 to 6 carbon atoms, a branched primary, secondary, tertiary or quarternary aminoalkyl group having 2 to 6 carbon atoms , an ethylenically unsaturated free radical polymerizable group capable of polymerization, a linear sulphonic acid alkyl group having 2 to 6 carbon atoms, a branched sulphonic acid alkyl group having 2 to 6 carbon atoms or morpholine.

Particularly preferred embodiment 4

Water in oil emulsion comprising

(a) 30 to 65 wt.-% acrylamide-free polymer as described within any of particularly preferred embodiments 1 to 3;

(b) 30 to 65 wt.-% water;

(c) 25 to 35 wt.-% oil;

(d) 2 to 4 wt.-% emulsifier.

Particularly preferred embodiment 5

Process for dewatering of sludge water streams comprising the following steps:

(i) Contacting the sludge water stream with from 0.01 to 2.5 kg of the acrylamide-free polymer as described in any of particularly preferred embodiments 1 to 3 per 1000 kg solids of the sludge water stream for a time period of from 1 second to 1 hour;

(ii) Separation of the sediment;

wherein the sludge water stream contains from 0.1 to 5 wt.-% of a salt.
Particularly preferred embodiment 6
Process for dewatering of sludge water streams as described within particularly preferred embodiment 5, further comprising

step (x) contacting the sludge water stream with from 0.001 to 2.0 wt.-% (weight mineral per dry weight sediment), at least one mineral,

wherein step (x) is carried out before step (i).
Particularly preferred embodiment 7
Process for dewatering of sludge water streams as described within particularly preferred embodiment 6, wherein the at least one mineral is coated with from 0.1 to 5 wt.-% of cationic starch, anionic starch, guar gum, xanthan, fatty acids or the acrylamide-free polymer according to the invention.
Particularly preferred embodiment 8
Use of the acrylamide-free polymer as defined in any of particularly preferred embodiments 1 to 3 for dewatering of sludge water streams with a salt content of from 0.1 to 5 wt.-%.

Examples

The present invention is now described by the following examples and figures. The examples and figures are for illustrative purposes only and are not to be understood as limiting the invention.

Fig. 1 shows the particle size distribution of Hamburg Harbour water used within the examples.

Fig. 2 shows a graphical illustration of the particle size distribution of Hamburg Harbour water used within the examples.

Example 1: Sedimentation of sludge from Hamburg harbour and determination of sedimentation capacity of invented polymer emulsions

1. Preparing the acrylic acid ammonium salt solution

In a 4-neck round-bottom flask, equipped with a KPG stirrer, a pH electrode (Knick Portamess 913), an internal thermometer and a dropping funnel, 500 g of acrylic acid (Sigma-Aldrich) were cooled with an ice bath. By drop-wise addition of 363 g of 33% ammonium hydroxide solution (Sigma-Aldrich), the pH was adjusted to 6.5. The resulting solution had a concentration of 72.4%.

2. Preparing the 2-acrylamido-2-methyl-1-propanesulfonic acid ammonium salt solution

In a 4-neck round-bottom flask, equipped with a KPG stirrer, a pH electrode (Knick Portamess 913), an internal thermometer and a dropping funnel, 500 g of a 50% aqueous solution of 2-acrylamido-2-methyl-1-propanesulfonic acid (Sigma-Aldrich) were cooled with an ice bath. By passing ammonia gas through the solution, the pH was adjusted to 6.8. The resulting solution had a concentration of 52.3%.

3. Emulsion polymerization (exemplary description polymer No. 7)

In a 4-neck round-bottom flask, equipped with a KPG stirrer, a distillation bridge with removal vessel and vacuum connection, an internal thermometer and a dropping funnel, 99.7 g of the ammonium acrylate solution described under 1., 18.1 g of dimethylacrylamide (Sigma-Aldrich), 1.2 g of sodium diethylenetriaminepentaacetate (40%, Sigma-Aldrich) were dissolved in 93.4 g of water. In a glass beaker, 6.3 g of Tween 85 (Sigma-Aldrich), 3.1 g of Genapol 0080 (Clariant) and 0.04 g of 2,2'-azobis(2.4-dimethylvaleronitrile) (V-65, Wako) were dissolved in 78.2 g of Total EDC 99 (Total) and this solution was added with steady stirring to the aqueous reaction mixture. This produced a white W/O emulsion having a viscosity of 24 cP (spindle 4). N2 was blown through the reaction mixture for 15 minutes, followed by treatment with a three-fold vacuum/N2 filling cycle. After the preparations were concluded, the polymerization was initiated by an increase in internal temperature to 60°C, with the vacuum being set at 120 - 140 mbar and being maintained for 20 minutes. After the polymerization has subsided, the reaction mixture was heated to an internal temperature of 80°C and stirring was continued for 60 minutes. To destroy the residual monomer, the reaction mixture was cooled to an internal temperature of 30°C and 0.3 g of sodium persulfate and 0.3 g of sodium disulfite in solution each in 2 g of water were added, followed by stirring for 30 minutes more. The water/oil mixture (30.8 g) removed by distillation was discarded, to give as the product an emulsion having a solids content of 32.2%, a Brookfield viscosity of 175 cP (spindle 3) and a weight-average molecular weight of Mw = 2,250,000 Da with a dispersity of *Đ* = 7.9.

4. Preparation of polymers No. 4 to 6 and 8 to 16

Polymer emulsions no. 4 to 6 and 8 to 16 were prepared in the same way as No. 7, with the composition described in Table 1.

List of abbreviations

| | |
|---|---|
| W/O | water-in-oil |
| KPG | Kerngezogenes Präzisions-Glasgerät (core-drawn precision glass apparatus - mechanical stirrer) |
| *Đ* | Dispersity determined by GPC |
| *Mw* | Weight-average molecular weight determined by GPC |
| DI water | deionized water |
| AmAA | Acrylic acid ammonium salt solution (72,4 wt-% in water) |
| AMPSAA | 2-Acrylamido-2-methyl-1-propanesulfonic acid ammonium salt solution (52,3 wt-% in water) |
| DMA | N,N'-Dimethyl acrylamide (Sigma-Aldrich) |
| HEA | 2-Hydroxyethyl acrylate (Sigma-Aldrich) |
| HEMA | 2-Hydroxyethyl methacrylate (Sigma-Aldrich) |
| DMAEMA | 2-(Dimethylamino)ethyl methacrylate (Sigma-Aldrich) |
| MAH | Maleic anhydride (Sigma-Aldrich) |
| MBA | N,N'-Methylenbis(acrylamide) (Sigma-Aldrich) |
| IA | Itaconic acid (Sigma-Aldrich) |
| ACM | 4-Acryloylmorpholine (Sigma-Aldrich) |
| DMAPAA | N-[3-(Dimethylamino)propyl]acrylamide (Kohjin) |
| O080 | Genapol 0080 (Clariant) |
| T85 | Tween 85 (Sigma-Aldrich) |
| EDC99 | Total EDC 99 (Total) |
| NaS2O8 | Sodium persulfate (Sigma-Aldrich) |
| NaS2O5 | Sodium metabisulfite (Sigma-Aldrich) |

(continued)

| | |
|---|---|
| V65 | 2,2'-Azobis-(2,4-dimethylvaleronitrile) (Wako) |
| Na5DTPA | Diethylenetriamine-pentaacetic acid pentasodium salt solution (Sigma-Aldrich, 40 wt% in water) |

Table 1 Composition of the inventive polymers

| Polymer No. | 4 | 5 | 6 | 7 | 8 | 9 | 10 | 11 | 12 | 13 | 14 | 15 | 16 | 17 |
|---|---|---|---|---|---|---|---|---|---|---|---|---|---|---|
| DI Wasser (g) | 120.3 | 120.3 | 120.3 | 120.3 | 120.3 | 120.3 | 120.3 | 120.3 | 120.3 | 120.3 | 120.3 | 120.3 | 120.3 | 120.3 |
| AmAA (g) | 90.2 | 72.2 | 45.1 | 72.2 | 45.1 | 45.1 | 72.2 | 72.2 | 72.2 | 72.2 | 72.2 | 72.2 | 90.3 | 72.2 |
| AMPSAA (g) | | 18.1 | 45.1 | | 36.1 | 27,1 | | | | | | | | |
| DMA (g) | | | | 18.1 | 9.0 | 18.1 | | | | | | | | 9.0 |
| HEA (g) | | | | | | | 18.1 | | | | | | | |
| DMAEMA (g) | | | | | | | | 18.1 | | | | | | |
| MAH (g) | | | | | | | | | 18.1 | | | | | |
| IA (g) | | | | | | | | | | 18.1 | | | | |
| ACM (g) | | | | | | | | | | | 18.1 | | | |
| DMAPAA(g) | | | | | | | | | | | | 18.1 | | |
| MBA (g) | | | | | | | | | | | | | 0.01 | |
| HEMA (g) | | | | | | | | | | | | | | 9.0 |
| O080 (g) | 3.1 | 3.1 | 3.1 | 3.1 | 3.1 | 3.1 | 3.1 | 3.1 | 3.1 | 3.1 | 3.1 | 3.1 | 3.1 | 3.1 |
| T85 (g) | 6.3 | 6.3 | 6.3 | 6.3 | 6.3 | 6.3 | 6.3 | 6.3 | 6.3 | 6.3 | 6.3 | 6.3 | 6.3 | 6.3 |
| EDC99 (g) | 78.2 | 78.2 | 78.2 | 78.2 | 78.2 | 78.2 | 78.2 | 78.2 | 78.2 | 78.2 | 78.2 | 78.2 | 78.2 | 78.2 |
| NaS2O8 (g) | 0.3 | 0.3 | 0.3 | 0.3 | 0.3 | 0.3 | 0.3 | 0.3 | 0.3 | 0.3 | 0.3 | 0.3 | 0.3 | 0.3 |
| NaS2O5 (g) | 0.3 | 0.3 | 0.3 | 0.3 | 0.3 | 0.3 | 0.3 | 0.3 | 0.3 | 0.3 | 0.3 | 0.3 | 0.3 | 0.3 |
| V65 (g) | 0.04 | 0.04 | 0.04 | 0.04 | 0.04 | 0.04 | 0.04 | 0.04 | 0.04 | 0.04 | 0.04 | 0.04 | 0.04 | 0.04 |
| Na5DTPA (g) | 1.2 | 1.2 | 1.2 | 1.2 | 1.2 | 1.2 | 1.2 | 1.2 | 1.2 | 1.2 | 1.2 | 1.2 | 1.2 | 1.2 |

5. Production of an aqueous polymer solution

Table 2 Dissolving times for producing a 0.1 % solution of polymer in DI water, ready for use in the application

| Polymer | Consistency | Preparation time (min) |
|---|---|---|
| Nerolan AG570 (Comparison not acrylamide-free)[a)] | Fine granules | 120 |
| Nerolan AG580 (Comparison acrylamide-free)[a)] | Coarse granules | 180 |
| Polymer no. 4 (invention) | Emulsion | <10 |
| Polymer no. 7 (invention) | Emulsion | <10 |
| Polymer no. 10 (invention) | Emulsion | <10 |
| Polymer no. 13 (invention) | Emulsion | <10 |
| Polymer no. 15 (invention) | Emulsion | <10 |
| Polymer no. 16 (invention) | Emulsion | <10 |
| [a]Nerolan Wassertechnik GmbH Krefeld | | |

These results show that the inventive emulsion solutions of the flocculation polymers were able to reduce very sharply the long preparation times of the flocculation polymers typically employed in this application.

6. Determination of sedimentation capacity

In this example, the flocculation capacity of the polymer emulsions used in the present invention was investigated using a sample of water from Hamburg harbour. The solids content was measured according to DIN 38414 Part 2 at 105 °C and was 6.2%.

Experimental procedure: To a 100 ml measuring cylinder containing 50 ml of harbour water (6.2% solids content) were added 0.3 g/kg of the anionic polymer solutions No.s 4 to 16 (diluted as a 0.1% aqueous solution). The mixture was shaken for three times by turning the covered cylinder up-side-down and left for phase separation. The sedimentation time (ts) was measured for the formation of supernatant forming above the depositing flocs between a volume of 45 mL and 30 mL. That means the stop clock was started when the deposit passed 45 mL and stopped when it passed the 30 mL mark. The quantity figures are based on the dry mass of the sludge sample for dewatering. For instance, 0.3 g/kg stands for 0.3 g of component per kg of dry mass of the sludge to be dewatered (1 kg of harbour sludge contained 62 g solids); for a batch size of 50 ml of sludge to be dewatered, 0.3 g/kg corresponds to 0.00093 g of polymer or 0.93 g of a 0.1 wt-% polymer solution.

The sedimentation behaviour of the flocculation polymers used in this example can be seen in Table 3, with a shorter sedimentation times and higher ratio of $V_t/t_s$ representing more effective dewatering. Furthermore, a lower turbidity number is an expression of improved sedimentation and therefore of greater purity of the water removed.

Table 3. Sedimentation behaviour of the flocculation polymers

| Polymer | $t_s$[a)] | $c_{pol}$[b)] | $T_{sup}$[c)] | $C_{Sed}$[d)] | $V_t/t_s$ |
|---|---|---|---|---|---|
| | (min) | (kg/1000kg) | (FNU) | (1/min) | (mL/min) |
| Nerolan AG570 (comparison, not acrylamide-free)[e)] | 2.55 | 0.3 | 377 | 107 | 9.5 |
| Nerolan AG580 (comparison, acrylamide-free)[e)] | 8.67 | 0.3 | 242 | 40 | 3.3 |
| Sokalan 110S (comparison, acrylamide-free)[f)] | 11.28 | 0.3 | 333 | 45 | 4.0 |
| Polymer no. 4 (invention) | 1.48 | 0.3 | 384 | 114 | 10.1 |
| Polymer no. 5 (invention) | 0.28 | 0.3 | 285 | 632 | 53.6 |
| Polymer no. 6 (invention) | 0.48 | 0.3 | 306 | 364 | 31.3 |
| Polymer no. 7 (invention) | 0.55 | 0.3 | 238 | 332 | 27.3 |

(continued)

| Polymer | $t_s$ [a)] | $c_{pol}$ [b)] | $T_{sup}$ [c)] | $C_{Sed}$ [d)] | $V_t/t_s$ |
|---|---|---|---|---|---|
| | (min) | (kg/1000kg) | (FNU) | (1/min) | (mL/min) |
| Polymer no. 8 (invention) | 0.47 | 0.3 | 579 | 334 | 31.9 |
| Polymer no. 9 (invention) | 0.70 | 0.3 | 530 | 228 | 21.4 |
| Polymer no. 10 (invention) | 1.32 | 0.3 | 520 | 121 | 11.4 |
| Polymer no. 11 (invention) | 2.35 | 0.3 | 143 | 86 | 6.4 |
| Polymer no. 12 (invention) | 1.03 | 0.3 | 566 | 153 | 14.6 |
| Polymer no. 13 (invention) | 1.07 | 0.3 | 726 | 142 | 14.0 |
| Polymer no. 14 (invention) | 0.65 | 0.3 | 591 | 241 | 23.1 |
| Polymer no. 15 (invention) | 2.32 | 0.3 | 179 | 83 | 6.5 |
| Polymer no. 16 (invention) | 2.23 | 0.3 | 435 | 74 | 6.7 |
| Polymer no. 17 (invention) | 2.33 | 0.3 | 258 | 77 | 6.4 |

a) Sedimentation time ($t_s$), obtained from sludge water sample with a volume $V_0$ = 50 mL, referring to the time for the formation of a supernatant with a volume of $V_t$ = 15 mL
b) Polymer concentration ($c_{pol}$) compared to the solids present in the sludge sample (kg/1000kg solids
c) Turbidity, measured photometrically according to ISO 7027 using HACH 2100Qis Portable Turbimeter, calibrated with 4 standards (10, 20, 100 and 800 FNU).
d) Sedimentation capacity $C_{sed} = V_t{}^*V_0{}^{-1*}t_s{}^{-1*}(\ln(T_{sup}/T1))^{-1*}C_{pol}{}^{-1*}1000$, wherein $V_0$ represents the total volume of the sludge sample before addition of the flocculant (mL), $V_t$ represents the volume of the supernatant (dewatered water from the sludge sample at the time $t_s$) (ml), $t_s$ represents the sedimentation time (min), T1 represents the turbidity of the sludge sample diluted to 1 mg/kg solids (FNU), $\ln(T_{sup}/T1)$ represents the natural logarithm of the ratio of turbidity of the supernatant (FNU) and T1 measured after 30 min and $c_{pol}$ represents the concentration of the polymer compared to the solids present in the sludge sample (kg/1000kg solids).
e) Nerolan Wassertechnik GmbH Krefeld; Nerolan AG570 contains polyacrylamide-containing polymer
f) BASF

7. Sedimentation of sludge from Hamburg harbour

In this example, the flocculation capacity of the polymer emulsions used in the present invention was investigated using a sample of sludge from Hamburg harbour. The solids content was measured according to DIN 38414 Part 2 at 105°C and was 6.2%. The particle size distribution of Hamburg harbour sludge as used within the examples is shown in figures 1 and 2.

Analysis of sludge from port of Hamburg

s.c. 6.2 %
pH-value 7.3
conductivity 1530 μS/cm
charge -412,5 mV
charge density 15,64 μeq/g
T1 = 1 FNU

Analysis of metals of sludge from port of Hamburg by ICP-MS and ICP-OES

aluminum: 15000 μg/g
arsenic: 14 μg/g

barium: 130 μg/g
lead: 33 μg/g
boron: 18 μg/g
chromium: 31 μg/g
ferrum: 13000 μg/g
copper: 48 μg/g
manganese: 990 μg/g
nickel: 14 μg/g
phosphorous: 870 μg/g
rubidium: 33 μg/g
strontium: 65 μg/g
titanium: 130 μg/g
vanadium: 26 μg/g
zinc: 250 μg/g

Instrumentation:

Weight-average molecular weights were obtained by gel permation chromatography (GPC), measured against polyacrylate standards using PSS NOVEMA MAX Guard columns (size 1x30Å and 2x1000Å; 10 μm, 300 mm x 8 mm). The viscosity was measured on a Brookfield DV-I viscometer. The conductivity was measured by a ProfiLine Cond 197i, turbidity was measured photometrically according to ISO 7027 using HACH 2100Qis Portable Turbimeter, calibrated with 4 standards (10, 20, 100 and 800 FNU). The charge and the charge density were measured by Mütek PCD-04 equipped with a titrator PCD-T3 using a 5 min stabilization time and polydiallyldimethylammonium chloride (Poly(DADMAC)®) as titrant. The solid content was measured gravimetrically by drying a representative sludge sample in vacuum oven at 105 °C until constant weight. Inductively coupled plasma mass spectrometry (ICP-MS) was measured on a Varian 820-MS and inductively coupled plasma optical emission spectrometry (ICP-OES) was measured on an Agilent 5100.

To a 100 ml measuring cylinder containing 50 ml of harbour sludge (6.2% solids content) were added 3 g/kg of a surface-treated calcium carbonate (MCC R 450 ME (Omya AG)). The mixture was shaken for three times by turning the covered cylinder up-side-down. Afterwards, 0.3 g/kg of the anionic polymer solutions (polymers No 4 to 8; diluted as a 0.1% aqueous solution) were added to the mixture and shaken again for three times by turning the covered cylinder up-side-down and left for phase separation. The sedimentation time (ts) was measured for the formation of supernatant forming above the depositing flocs between a volume of 45 mL and 30 mL. That means the stop clock was started when the deposit passed 45 mL and stopped when it passed the 30 mL mark. The quantity figures are based on the dry mass of the sludge sample for dewatering. For instance, 0.3 g/kg stands for 0.3 g of component per kg of dry mass of the sludge to be dewatered (1 kg of harbour sludge contained 62 g solids); for a batch size of 50 ml of sludge to be dewatered, 0.3 g/kg corresponds to 0.00093 g of polymer or 0.93 g of a 0.1 wt.-% polymer solution. The surface-treated calcium carbonate (MCC R 450 ME) was applied as 10 wt.-% solution.

The sedimentation behaviour of the flocculation polymers used in this example can be seen in Table 4, with shorter sedimentation times and higher ratio of $V_t/t_s$ representing more effective dewatering. Furthermore, a lower turbidity number is an expression of improved sedimentation and therefore of greater purity of the water removed.

Table 4. Sedimentation behaviour of the flocculation polymers

| Polymer | $t_s$ [a)] | $c_{pol}$ [b)] | $T_{sup}$ [c)] | $C_{Sed}$ [d)] | $V_t/t_s$ |
|---|---|---|---|---|---|
| | (min) | (kg/1000kg) | (FNU) | (1/min) | (mL/min) |
| Nerolan AG570 (comparison, not acrylamide-free)[e)] | 2.55 | 0.3 | 44 | 104 | 5.9 |
| Nerolan AG580 (comparison, acrylamide-free)[e)] | 8.67 | 0.3 | 47 | 30 | 1.7 |
| Sokalan 110S (comparison, acrylamide-free)[f)] | 11.28 | 0.3 | 34 | 25 | 1.3 |
| Polymer no. 4 (invention) | 1.57 | 0.3 | 77 | 147 | 9.6 |
| Polymer no. 5 (invention) | 0.98 | 0.3 | 45 | 268 | 17.7 |
| Polymer no. 6 (invention) | 0.55 | 0.3 | 76 | 420 | 27.3 |
| Polymer no. 7 (invention) | 0.78 | 0.3 | 47 | 334 | 19.2 |

(continued)

| Polymer | $t_s$[a)] | $c_{pol}$[b)] | $T_{sup}$[c)] | $C_{Sed}$[d)] | $V_t/t_s$ |
|---|---|---|---|---|---|
| | (min) | (kg/1000kg) | (FNU) | (1/min) | (mL/min) |
| Polymer no. 8 (invention) | 0.28 | 0.3 | 179 | 688 | 53.6 |

a) Sedimentation time (ts), obtained from sludge water sample with a volume $V_0$ = 50 mL, referring to the time for the formation of a supernatant with a volume of $V_t$ = 15 mL
b) Polymer concentration ($c_{pol}$) compared to the solids present in the sludge sample (kg/1000kg solids)
c) Turbidity, measured photometrically according to ISO 7027 using HACH 2100Qis Portable Turbimeter, calibrated with 4 standards (10, 20, 100 and 800 FNU).
d) Sedimentation capacity $C_{sed} = V_t{}^*V_0{}^{-1}{}^*t_s{}^{-1}{}^*(\ln(T_{sup}/T1))^{-1}{}^*c_{pol}{}^{-1}{}^*1000$, wherein $V_0$ represents the total volume of the sludge sample before addition of the flocculant (mL), $V_t$ represents the volume of the supernatant (dewatered water from the sludge sample at the time $t_s$) (ml), $t_s$ represents the sedimentation time (min), T1 represents the turbidity of the sludge sample diluted to 1 mg/kg solids (FNU), $\ln(T_{sup}/T1)$ represents the natural logarithm of the ratio of turbidity of the supernatant (FNU) and T1 measured after 30 min and $c_{pol}$ represents the concentration of the polymer compared to the solids present in the sludge sample (kg/1000kg solids).
e) Nerolan Wassertechnik GmbH Krefeld; Nerolan AG570 contains polyacrylamide-containing polymer
f) BASF

These results show that the inventive flocculation polymers achieve the best results, particularly in the context of dewatering. Furthermore, the inventive examples afford outstanding results in relation to the other parameters.

Example 2: Sedimentation of sludge from Hamburg harbour by direct use of the concentrated emulsion

In this example, the flocculation capacity of the polymer emulsions prepare and used in the present invention was investigated, as under points 1. to 7. of example 1, on the same sample of sludge from Hamburg harbour. In this case the concentrated polymer emulsion was used directly as a flocculant and was compared with the 0.1 % solutions of the comparative polymers and of the inventive polymers.

The experimental procedure took place in the same way as in the method described under point 7, with the difference that polymer no. 5 was used, in one case as a dilute 0.1 % solution and in one case directly as a concentrated polymer emulsion. When the polymer was used as concentrated solution, the sludge was shaken for 10 times instead of 3. Table 4 shows the results of the investigation and the comparison with known polymers, all of which can be used only as 0.1% solutions.

| Polymer | $t_s$[a)] | $c_{pol}$[b)] | $T_{sup}$[c)] | $C_{Sed}$[d)] | $V_t/t_s$ |
|---|---|---|---|---|---|
| | (min) | (kg/1000kg) | (FNU) | (1/min) | (mL/min) |
| Nerolan AG580 (comparison, acrylamide-free)[e)] | 8.67 | 0.3 | 47 | 30 | 1.7 |
| Sokalan 110S (35 wt.-% solution, comparison, acrylamide-free)[f)] | 11.28 | 0.3 | 34 | 25 | 1.3 |
| Polymer no. 5 (0.1 wt.-% solution, invention) | 0.98 | 0.3 | 45 | 268 | 17.7 |

(continued)

| Polymer | $t_s$[a)] | $c_{pol}$[b)] | $T_{sup}$[c)] | $C_{Sed}$[d)] | $V_t/t_s$ |
|---|---|---|---|---|---|
| | (min) | (kg/1000kg) | (FNU) | (1/min) | (mL/min) |
| Polymer no. 5 (35 wt.-% solution, invention) | 4.6 | 0.3 | 64 | 52 | 3.3 |

a) Sedimentation time (ts), obtained from sludge sample with a volume $V_0$ = 50 mL, referring to the time for the formation of a supernatant with a volume of $V_t$ = 15 mL
b) Polymer concentration ($c_{pol}$) compared to the solids present in the sludge sample (kg/1000kg solids)
c) Turbidity, measured photometrically according to ISO 7027 using HACH 2100Qis Portable Turbimeter, calibrated with 4 standards (10, 20, 100 and 800 FNU).
d) Sedimentation capacity $C_{sed} = V_t{*}V_0^{-1}{*}t_s^{-1}{*}(\ln(T_{sup}/T1))^{-1}{*}c_{pol}^{-1}{*}1000$, wherein $V_0$ represents the total volume of the sludge sample before addition of the flocculant (mL), $V_t$ represents the volume of the supernatant (dewatered water from the sludge sample at the time $t_s$) (ml), $t_s$ represents the sedimentation time (min), T1 represents the turbidity of the sludge sample diluted to 1 mg/kg solids (FNU), $\ln(T_{sup}/T1)$ represents the natural logarithm of the ratio of turbidity of the supernatant (FNU) and T1 measured after 30 min and $c_{pol}$ represents the concentration of the polymer compared to the solids present in the sludge sample (kg/1000kg solids).
e) Nerolan Wassertechnik GmbH Krefeld; Nerolan AG570 contains acrylamide-containing polymer
f) BASF

These results show that the inventive flocculation components can also be used directly as a concentrated emulsion in the context of sediment dewatering and that the best outcome is obtained in relation to the short preparation time. Furthermore, the inventive examples yield outstanding results in terms of turbidity.

## Claims

1. Acrylamide-free polymer for dewatering of sludge water streams with a sedimentation capacity $C_{sed}$ of more than 70 1/min.

2. Acrylamide-free polymer according to claim 1, wherein the ratio of volume $V_t$ and sedimentation time $t_s$ is selected from the range of from 6 to 100 ml/min

3. Acrylamide-free polymer according to any of the foregoing claims which has an overall anionic charge.

4. Acrylamide-free polymer according to any of the foregoing claims which has an average molecular weight (Mw) higher than 500,000 Da.

5. Acrylamide-free polymer according to any of the foregoing claims comprising from 50.1 to 100 mol-% polyacrylic acid and/or polymethacrylic acid and/or salts of polyacrylic and/or polymethacrylic acid.

6. Acrylamide-free polymer according to any of the foregoing claims comprising from 0.001 to 49.9 mol-% of a repeating unit consisting of the following structure:

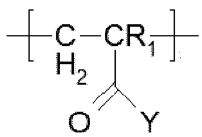

wherein R1 is hydrogen, methyl or ethyl, carboxymethyl
wherein Y is OR2 or NR2R3,
wherein R2 is hydrogen, a linear alkyl group having 1 to 50 carbon atoms, a branched alkyl group having 1 to 50 carbon atoms, a linear monohydroxyalkyl group having 2 to 6 carbon atoms, a branched monohydroxyalkyl group having 2 to 6 carbon atoms, a linear dihydroxyalkyl group having 2 to 6 carbon atoms, a branched dihydroxyalkyl group having 2 to 6 carbon atoms, a linear primary, secondary, tertiary or quarternary aminoalkyl group having 2 to 6 carbon atoms, a branched primary, secondary, tertiary or quarternary aminoalkyl group having 2 to 6 carbon

atoms , an ethylenically unsaturated free radical polymerizable group capable of polymerization, a linear sulphonic acid alkyl group having 2 to 6 carbon atoms or its salts or a branched sulphonic acid alkyl group having 2 to 6 carbon atoms or its salts,
wherein R3 is a linear alkyl group having 1 to 50 carbon atoms, a branched alkyl group having 1 to 50 carbon atoms, a linear monohydroxyalkyl group having 2 to 6 carbon atoms, a branched monohydroxyalkyl group having 2 to 6 carbon atoms, a linear dihydroxyalkyl group having 2 to 6 carbon atoms, a branched dihydroxyalkyl group having 2 to 6 carbon atoms, a linear primary, secondary, tertiary or quarternary aminoalkyl group having 2 to 6 carbon atoms, a branched primary, secondary, tertiary or quarternary aminoalkyl group having 2 to 6 carbon atoms , an ethylenically unsaturated free radical polymerizable group capable of polymerization, a linear sulphonic acid alkyl group having 2 to 6 carbon atoms, a branched sulphonic acid alkyl group having 2 to 6 carbon atoms or morpholine.

**7.** Acrylamide-free polymer according to claim 6, comprising a co-monomer wherein the co-monomer is selected from the group consisting of 2-methyl-2-(1-oxo-2-propenyl)amino-1-propanesulfonic acid and its salts, 4-acryloylmorpholine, N,N'-dimethyl-2-propenamide, N,N'-diethyl-2-propenamide, N-isopropyl2-propenamide, hydroxyethyl2-propenamide, N,N'-dimethylaminoethyl methacrylate, N,N'-dimethylaminoethyl acrylate, 2-hydroxylethyl acrylate, 2-hydroxylethyl methacrylate, maleic anhydride, itaconic acid and its salts, 2-carboxyethyl acrylate and its salts, and N,N'-methylene-bis-2-propenamide and combinations thereof.

**8.** Acrylamide-free polymer according to any of claims 1 to 7 produced through a water-in-oil emulsion polymerization.

**9.** Water in oil emulsion comprising

(a) 10 to 65 wt.-% acrylamide-free polymer as defined in any of claims 1 to 8;
(b) 10 to 65 wt.-% water;
(c) 20 to 45 wt.-% oil;
(d) 2 to 6 wt.-% emulsifier.

**10.** Water in oil emulsion according to claim 9 with a viscosity of from 10 to 2000 mPas.

**11.** Process for dewatering of sludge water streams comprising the following steps:

(i) Contacting the sludge water stream with from 0.01 to 2.5 kg of the acrylamide-free polymer as defined in any of claims 1 to 8 per 1000 kg solids of the sludge water stream for a time period of from 1 second to 1 hour;
(ii) Separation of the sediment.

**12.** Process according to claim 11, further comprising the step:

(x) Contacting the sludge water stream with from 0.001 to 2.0 wt.-% (weight mineral per dry weight sediment) of at least one mineral.

**13.** Process according to any of claims 11 or 12, wherein the sludge water stream contains from 0.1 to 5 wt.-% of a salt.

**14.** Use of the acrylamide-free polymer as defined in any of claims 1 to 8 for dewatering of sludge water streams.

| Accessory Name: | Analysis model: | Obscuration: | Weighted Residual: | Particle refrective index: |
|---|---|---|---|---|
| Hydro 2000S (A) | General purpose | 15.73 % | 0.719 % | 1.530 |

D(0.10) : 4.64 µm D(0.50) : 16.01 µm D(0.90) : 77.45 µm D(1.00) : 591.88 µm

| Size (µm) | Vol Under % | Size (µm) | Vol Under % | Size (µm) | Vol Under % | Size (µm) | Vol Under % | Size (µm) | Vol Under % |
|---|---|---|---|---|---|---|---|---|---|
| 0.010 | 0.00 | 0.500 | 0.13 | 5.000 | 11.33 | 60.000 | 86.20 | 250.000 | 98.07 |
| 0.020 | 0.00 | 0.600 | 0.41 | 7.000 | 19.42 | 70.000 | 88.60 | 300.000 | 98.59 |
| 0.040 | 0.00 | 0.700 | 0.73 | 10.000 | 31.53 | 80.000 | 90.42 | 400.000 | 99.32 |
| 0.060 | 0.00 | 0.800 | 1.04 | 15.000 | 47.46 | 90.000 | 91.83 | 500.000 | 99.78 |
| 0.080 | 0.00 | 0.900 | 1.31 | 20.000 | 58.27 | 100.000 | 92.94 | 600.000 | 100.00 |
| 0.100 | 0.00 | 1.000 | 1.56 | 25.000 | 65.70 | 125.000 | 94.84 | 750.000 | 100.00 |
| 0.200 | 0.00 | 2.000 | 3.20 | 30.000 | 71.06 | 150.000 | 96.01 | 900.000 | 100.00 |
| 0.300 | 0.00 | 3.000 | 5.09 | 40.000 | 78.26 | 175.000 | 96.78 | 1200.000 | 100.00 |
| 0.400 | 0.00 | 4.000 | 7.84 | 50.000 | 82.93 | 200.000 | 97.32 | 1500.000 | 100.00 |

FIG. 1

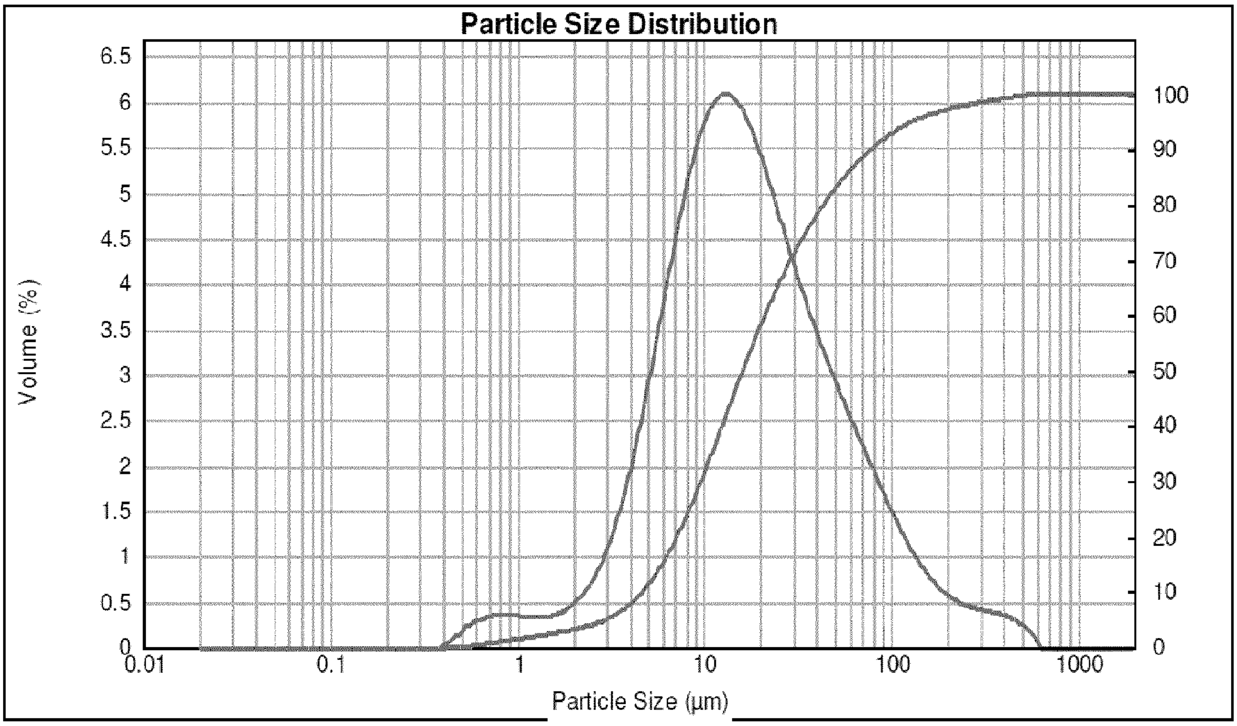
Particle Size Distribution
Volume (%)
6.5
6
5.5
5
4.5
4
3.5
3
2.5
2
1.5
1
0.5
0
0.01
0.1
1
10
100
1000
Particle Size (μm)
100
90
80
70
60
50
40
30
20
10
0

FIG. 2

Europäisches Patentamt
European Patent Office
Office européen des brevets

# EUROPEAN SEARCH REPORT

Application Number
EP 17 19 8872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/136438 A1 (G R S CHEMICAL TECHNOLOGIES S R L [IT]) 17 September 2015 (2015-09-17) * page 1, line 1 - line 16 * * page 5, line 1 - page 11, line 17 * * page 19, line 16 - page 24, line 22 * * examples 3-6,9; tables 1-2 * ----- | 1-14 | INV. B01D21/01 B01J20/26 C02F1/56 C08F220/06 C08F220/56 ADD. C02F103/08 C02F103/10 |
| X | GB 723 868 A (IND TAPE CORP) 16 February 1955 (1955-02-16) * page 1, line 1 - line 15 * * page 2, line 65 - page 4, line 37 * * claims 1-25 * ----- | 1-14 | |
| X | CN 102 786 132 A (UNIV SICHUAN NORMAL) 21 November 2012 (2012-11-21) * paragraph [0002] - paragraph [0019] * * claims 1-6 * ----- | 1-14 | |
| X,D | DE 10 2016 101417 A1 (CLARIANT LNTERNATIONAL LTD [CH]) 27 July 2017 (2017-07-27) | 1,14 | TECHNICAL FIELDS SEARCHED (IPC) |
| A | * paragraph [0001] - paragraph [0124] * * figures 1-10 * ----- | 2-13 | B01D B01J C02F C08F |

The present search report has been drawn up for all claims

| Place of search | Date of completion of the search | Examiner |
|---|---|---|
| The Hague | 31 January 2018 | Zsigmond, Zoltán |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 19 8872

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2018

| Patent document cited in search report | Publication date | Patent family member(s) | Publication date |
|---|---|---|---|
| WO 2015136438 A1 | 17-09-2015 | AU 2015228422 A1 | 20-10-2016 |
| | | CA 2941981 A1 | 17-09-2015 |
| | | CN 106536574 A | 22-03-2017 |
| | | EP 3116919 A1 | 18-01-2017 |
| | | JP 2017512241 A | 18-05-2017 |
| | | KR 20170021225 A | 27-02-2017 |
| | | US 2017107310 A1 | 20-04-2017 |
| | | WO 2015136438 A1 | 17-09-2015 |
| | | ZA 201606560 B | 29-11-2017 |
| GB 723868 A | 16-02-1955 | NONE | |
| CN 102786132 A | 21-11-2012 | NONE | |
| DE 102016101417 A1 | 27-07-2017 | DE 102016101417 A1 | 27-07-2017 |
| | | WO 2017129419 A1 | 03-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2002083258 A
- DE 102016101417 A1